# EUROPÄISCHE PATENTSCHRIFT

(11) **EP 0 790 689 B1**
(45) Veröffentlichungstag und Bekanntmachung des Hinweises auf die Patenterteilung: **10.04.2002**
(21) Anmeldenummer: 97101939.3
(22) Anmeldetag: 07.02.1997
(51) Int. Cl.: H02J 3/18, H02J 3/28, H02J 3/01

(54) **Verfahren zur Verbesserung der Spannungsqualität in einem Drehstromnetz und Anlage für die Durchführung des Verfahrens**
Method for the improvement of the voltage quality in an AC network and apparatus for implementing this method
Procédé pour l'amélioration de la qualité de tension dans un réseau AC et dispositif pour mettre en oeuvre ce procédé

(30) Priorität: 14.02.1996 DE 19605419
(43) Veröffentlichungstag der Anmeldung: 20.08.1997
(73) Patentinhaber: RWE Net Aktiengesellschaft, 44139 Dortmund (DE)
(72) Erfinder: Barth, Peter, Dipl.-Ing., 45276 Essen (DE); Kleimaier, Martin, Dr.-Ing., 45239 Essen (DE); Pestka, Joachim, Dr.-Ing., 46244 Bottrop (DE); Ratering-Schnitzler, Berthold, Dipl.-Ing.,, 46282 Dorsten (DE)
(74) Vertreter: Albrecht, Rainer Harald, Dr.-Ing.

(56) Entgegenhaltungen:
- DE-A- 4 238 892
- GB-A- 2 290 636
- US-A- 4 906 860

## Beschreibung

Die Erfindung betrifft ein Verfahren zur Verbesserung der Spannungsqualität in einem Drehstromnetz durch Leistungseinspeisung aus einem Energiespeicher mit Hilfe eines aktiven Kompensators, wobei
an jede der drei Phasen des Drehstromnetzes ein Umkehr-Stromrichter angeschlossen wird, der je nach dem augenblicklichen Leistungseinspeisungsbedarf des Drehstromnetzes den Energiespeicher lädt oder entlädt, und
die drei Umkehr-Stromrichter an den Energiespeicher angeschlossen und über einen Regler spannungsabhängig gesteuert werden.

Der aktive Kompensator hat bei einem Drehstromnetz die Aufgabe, durch zusätzliche Leistungseinspeisung in das Drehstromnetz oder Leistungsentnahme aus dem Drehstromnetz zur Verbesserung der Spannungsqualität beizutragen, die im Falle eines Spannungseinbruches benötigte Zusatzleistung wird aus dem Energiespeicher zur Verfügung gestellt und über die Umkehr-Stromrichter in das Drehstromnetz eingespeist, - und umgekehrt bei Spannungsspitzen. Der Begriff Leistungseinspeisung umfasst positive und negative Leistung, anders ausgedrückt, das Einschleusen von Leistung in das Drehstromnetz und das Ausschleusen von Leistung aus dem Drehstromnetz und damit das Laden und Entladen des Energiespeichers. Verbesserung der Spannungsqualität meint im Rahmen der Erfindung insbesondere unterbrechungsfreie Stromversorgung, Behebung von Spannungsschwankungen und von sogenannten Flickern, Oberschwingungen, Blindleistungskompensation, Primärregelung, Rundsteuerung, aber auch Ausgleich von Lastspitzen im Rahmen der vorhandenen Speicherleistung.

Nach herrschender Lehre arbeitet der Regler im Frequenzbereich. Dazu ist es erforderlich, zunächst die störenden Frequenzphänomene im Drehstromnetz zu erfassen, zu analysieren und auszuwerten, sowie nach Maßgabe der Auswertung eine Gegensteuerung vorzunehmen. Das nimmt eine Vielzahl von Millisekunden in Anspruch, was eine störende Reaktionsverzögerung bewirkt. Die erreichbare Verbesserung der Spannungsqualität findet dadurch eine Schranke. Bezüglich der Einzelheiten wird auf die einschlägige Literatur verwiesen, z. B. auf H. Ungrad u. a. "Schutztechnik in Elektroenergiesystemen", S. 283 bis 289, S. 366 bis 372, Springer 1994, und auf Tietze, Schenk: "Halbleiter-Schaltungstechnik", Abschnitt 27.4 bis 27.4.5, Springer 1993.

Das eingangs beschriebene Verfahren ist aus H. Freund, W. Kaufmann "Batteriestützpunkte in Mittel- und Niederspannungsnetzen", etz Bd. 108 (1987) Heft 17, S. 796 bis 799 bekannt. Im Rahmen der bekannten Maßnahmen wird der Effektivwert der Netzspannung als Regelgröße herangezogen, also der quadratische Mittelwert der Wechselspannung während einer Periode. Die schnellste Effektivwertbildung in einem 50 Hz-Netz liefert höchstens einen Wert in 10 ms. Die Regelung nach dem Stand der Technik besitzt folglich eine Verzögerung von mind. 10 ms. In einer solchen Verzögerung können die während der 10 ms-Periode auftretenden momentanen Abweichungen nicht hinreichend erkannt werden. Kurze und einmalige Abweichungen bleiben unberücksichtigt.

In US 4 906 860 ist ein Verfahren zur Verbesserung der Spannungsqualität in einem Wechselstromnetz durch Leistungseinspeisung aus einem Energiespeicher mit Hilfe eines aktiven Kompensators beschrieben. An die Phase des Wechselstromnetzes wird ein Umkehr-Stromrichter angeschlossen, der je nach dem augenblicklichen Leistungseinspeisungsbedarf des Drehstromnetzes den Energiespeicher lädt oder entlädt. Der Umkehrstromrichter wird spannungsabhängig gesteuert. Mit Hilfe einer Phase-Locked-Loop-Schaltung wird ein Soll-Strom ermittelt.

Der Erfindung liegt das technische Problem zugrunde, bei einem Verfahren zur Verbesserung der Spannungsqualität in einem Drehstromnetz die vorstehend beschriebene Reaktionsverzögerung zu unterdrücken.

Die Aufgabe wird bei dem eingangs beschriebenen Verfahren erfindungsgemäß dadurch gelöst, dass die im Drehstromnetz (1) vorliegende Ist-Spannung (Uᵢₛₜ) in Echtzeit, deren Zeitelemente durch Bruchteile einer einzigen Millisekunde definiert sind, erfasst und einem Rechner (4) zugeführt wird, der daraus eine ideale Sinus-Spannung als Sollspannung (Uₛₒₗₗ) durch ein in den Rechner (4) eingegebenes Bandpass-Modell errechnet, welches aus zwei hintereinander geschalteten Bandpässen (6.1, 6.2) besteht, die auf eine Frequenz von 50 Hz ± 0,1 Hz abgestimmt sind und phasendrehungsfrei arbeiten sowie eine Übertragungsfunktion (eins) aufweisen, und dass die spannungsabhängige Regelung der drei Umkehr-Stromrichter (2.1, 2.2, 2.3) entsprechend der Differenz zwischen der Ist-Spannung (Uᵢₛₜ) und der idealen Sinus-Spannung (Uₛₒₗₗ) erfolgt.

Die momentane Ist-Spannung wird erfindungsgemäß in Echtzeit ermittelt. Die vom Rechner gelieferte ideale Sinus-Spannung als Soll-Spannung wird in Echtzeit mit der Ist-Spannung verglichen. Echtzeit bezeichnet im Rahmen der Erfindung ein Zeitelement, welches nicht durch eine Vielzahl von Millisekunden, sondern durch Bruchteile einer einzigen Millisekunde definiert ist. Dieses Zeitelement ist kein Zeitpunkt, kommt jedoch der Gleichzeitigkeit nahe. Die Verzögerung, mit der die ideale Sinus-Spannung zur Verfügung steht, ist so kurz, dass die beschriebenen, auf Reaktionszeitverzögerung beruhenden Störungen nicht mehr auftreten. Moderne Rechner arbeiten so, dass auch die ideale Soll-Spannung in Bruchteilen einer Millisekunde zur Verfügung steht.

Im Rahmen der Erfindung kann die Soll-Spannung auch auf andere Weise als im Patentanspruch 1 angegeben ermittelt werden. Insoweit ist Gegenstand der Erfindung auch die Lehre des Patentanspruches 2. Hier wird die Grundfrequenz mit Hilfe der Phase-Locked-Loop-Schaltung bestimmt; die Amplitude wird über die vorausgegangen 1 bis 50 Perioden des Drehstromes aus der momentanen Betriebsspannung vom Rechner gebildet. Mit diesen beiden Informationen bildet der Rechner die ideale Sinus-Spannung als Soll-Spannung.

Zur Phase-Locked-Loop-Schaltung wird auf H Ungrad u. a. "Schutztechnik in Elektroenergiesystemen", S. 283 bis 289, S. 366 bis 372, Springer 1994 und Tietze, Schenk "Halbleiter-Schaltungstechnik", Abschnitt 27.4 bis 27.4.5, Springer 1993 verwiesen.

Umkehr-Stromrichter sind in verschiedenen Ausführungsformen bekannt, insbesondere auch als pulsweitenmodulierte Stromrichter. Die Umkehr-Stromrichter werden erfindungsgemäß im allgemeinen an eine Akkumulatorenbatterie als Energiespeicher angeschlossen. Im Rahmen der Erfindung liegt es aber auch, obgleich es aufwendiger ist, die Umkehr-Stromrichter an einen supraleitenden magnetischen Energiespeicher oder an einen anderen Energiespeicher anzuschließen. Als solche kommen z. B. Windkraftanlagen, Solarzellenanlagen und Brennstoffzellenanlagen in Frage. Sie arbeiten im Rahmen der Erfindung mit Stromeinspeisung in das Netz bzw. Stromentnahme aus dem Netz und Einspeicherung in die zugehörigen Energiespeicher.

Bevorzugte Ausgestaltungen des erfindungsgemäßen Verfahrens sind Gegenstand der Patentansprüche 3 bis 7.

Im folgenden wird die Erfindung anhand einer lediglich ein Ausführungsbeispiel darstellenden Zeichnung erläutert. Es zeigen:
- Fig. 1: das Schema einer Anlage, die für das erfindungsgemäße Verfahren eingerichtet ist,
- Fig. 2: ein Schema des Bandpassmodells für den Rechner der Anlage,
- Fig. 3: eine schematische Darstellung zur Erläuterung des Regelvorganges,
- Fig. 4 bis 6: grafische Darstellungen, welche die durch die Erfindung erreichten Wirkungen erkennen lassen.

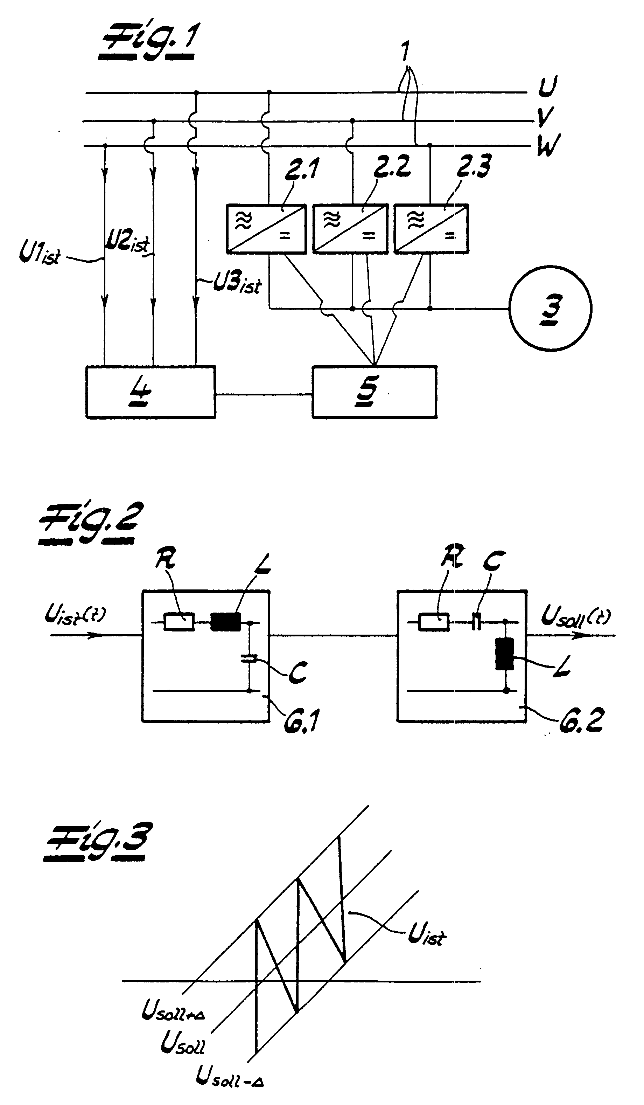

In Fig. 1 erkennt man die drei Leiter eines Drehstromnetzes 1, U, V, W. Jede der drei Phasen U, V und W ist an einen Umkehr-Stromrichter 2.1, 2.2 bzw. 2.3 angeschlossen. Die Umkehr-Stromrichter 2.1, 2.2 und 2.3 sind an den gleichen und gemeinsamen Energiespeicher 3 angeschlossen. In Echtzeit wird die im Drehstromnetz vorliegende Ist-Spannung erfasst und einem Rechner 4 zugeführt, der daraus eine ideale Sinus-Spannung als Soll-Spannung ermittelt. Die Pfeile U1ᵢₛₜ, U2ᵢₛₜ, U3ᵢₛₜ deuten in Fig. 1 das Erfassen der Ist-Spannungen und das Zuführen dieser Ist-Spannungen zu dem Rechner 4 an. Die Umkehr-Stromrichter 2.1, 2.2 und 2.3 sind mit dem Regler 5 verbunden. Sie werden von diesem nach Maßgabe der Differenz zwischen der momentanen Ist-Spannung und der momentanen idealen Sinus-Spannung geregelt.

In der Fig. 2 erkennt man ein Bandpassmodell mit zwei hintereinander geschalteten Bandpässen 6.1 und 6.2. Die Anordnung und Schaltung sind so getroffen, dass das Bandpassmodell in allen Frequenzen im Bereich 50 Hz ± 0,1 Hz ausreichend exakt die Übertragungsfunktion 1 (eins) aufweist. Die beiden Bandpässe 6.1 und 6.2 arbeiten phasendrehungsfrei. Das wird durch die unterschiedliche Position der Induktivitäten L und der Kapazitäten C in den Bandpässen erreicht. Letzteres bewirkt bei im übrigen gleicher Auslegung der Bandpässe 6.1 und 6.2, dass sich die Phasendrehungen kompensieren. Die Bandpassgüte ist durch den Widerstand R auf jeweils 50 begrenzt.

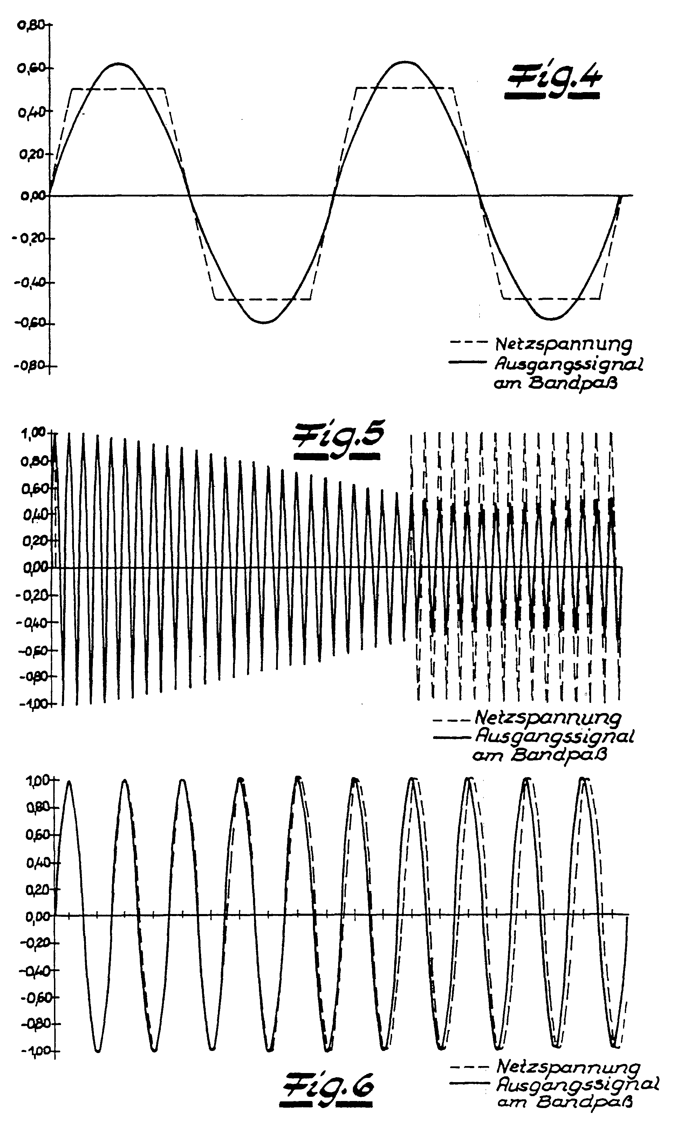

Die Umkehr-Stromrichter 2.1, 2.2 und 2.3 mögen im Ausführungsbeispiel als pulsweitenmodulierte Stromrichter ausgeführt sein. Ein solcher liefert grundsätzlich abwechselnd positiven oder negativen Nennstrom, wobei die momentanen Taktverhältnisse durch eine entsprechende Steuerung vorgegeben werden. Ist z. B. die Ist-Spannung kleiner als die ideale Sinus-Spannung (Soll-Spannung), so muss die Spannung durch Einspeisung des positiven Stroms so lange erhöht werden, bis die momentane Ist-Spannung eine obere Schwelle erreicht. Anschließend stellt: die Steuerung auf negativen Strom um, der wiederum so lange fließt, bis eine untere Schwelle erreicht wird. Dazu wird auf die Fig. 3 verwiesen, wo die momentanen Spannungen als Uᵢₛₜ, Uₛₒₗₗ, Uₛₒₗₗ + Δ, Uₛₒₗₗ - Δ dargestellt worden sind. Je nach Bedarf kann der hochfrequente Rippel durch kleine L/C-Filter kompensiert werden. Zur Realisierung dieser Regelung muss die momentane ideale Sinus-Spannung als Soll-Spannung aus der momentan im Netz vorliegenden Ist-Spannung errechnet werden. Das geschieht über die schon erläuterten, hintereinander geschalteten Bandpässe 6.1 und 6.2. Wie bereits erwähnt, ist es wesentlich, dass die Hintereinanderschaltung bei allen Frequenzen im Bereich 50 Hz ± 0,1 Hz ausreichend exakt die Übertragungsfunktion 1 (eins) aufweist und dass keine Phasendrehung auftritt.

Die beschriebene Bandpassfunktion lässt sich auf bekannte Art und Weise in das Software-Programm für den Rechner 4 transformieren, und der Rechner 4 kann den Regler 5 mit entsprechenden Führungsgrößen versorgen. Im Ergebnis wird in Echtzeit gearbeitet und sind die einleitend beschriebenen Reaktionsverzögerungen unterdrückt.

In den Fig. 4, 5 und 6 wird die Wirksamkeit des erfindungsgemäßen Verfahrens an einigen Beispielen erläutert.

Fig. 4 zeigt einen Test bei starken Oberschwingungen. Die Ist-Spannung Uᵢₛₜ (t) = sin ω t wurde so abgeschnitten, dass alle Werte, die betragsmäßig über 0,5 lagen, auf 0,5 gesetzt wurden. Wie Fig. 4 zeigt, ist die Soll-Spannung Uₛₒₗₗ(t) der ideale 50 Hz-Grundschwingungssinus.

Fig. 5 zeigt eine Kurzunterbrechung von 500 ms. Die momentane Soll-Spannung schwingt, wie gewünscht, mit 50 Hz weiter und nimmt allmählich in der Amplitude ab. Hier ist erkennbar, dass bei beliebigen Spannungseinbrüchen ein Spannungssollwert vorgegeben wird, der einen einwandfreien Weiterbetrieb aller Kundenanlagen ermöglicht. Damit ist die Funktion als dynamische Flickerkompensation sowie als unterbrechungsfreie Stromversorgung bestätigt.

Fig. 6 zeigt einen Test zur Primärregelung. Nach dem Einbruch der Netzfrequenz auf 49,5 Hz schwingt die Soll-Spannung mit 50 Hz weiter und passt sich erst zeitverzögert der neuen Netzfrequenz an. Dies ruft, wie gewünscht, eine zusätzliche Wirkleistungseinspeisung hervor. Dadurch wird die Netzfrequenz gestützt. Wird bei einer Anlage für die Durchführung des erfindungsgemäßen Verfahrens der Speicher 3 hinreichend groß ausgelegt, können den beschriebenen schnellen Regelvorgängen noch weitere langsam nachregelnde Funktionen überlagert werden. Stellt sich heraus, dass am Netzanschluss die Spannung insgesamt zu niedrig ist, kann der Spannungssollwert erhöht werden, so dass die Anlage zusätzlich zur Spannungsstützung Blindleistung ins Netz speist. Selbst Primärregelungseigenschaften sind einrichtbar.

## Patentansprüche

1. Verfahren zur Verbesserung der Spannungsqualität in einem Drehstromnetz (1) durch Leistungseinspeisung aus einem Energiespeicher (3) mit Hilfe eines aktiven Kompensators, wobei
an jede der drei Phasen (U, V, W) des Drehstromnetzes (1) ein Umkehr-Stromrichter (2.1, 2.2, 2.3) angeschlossen wird, der je nach dem augenblicklichen Leistungseinspeisungsbedarf des Drehstromnetzes (1) den Energiespeicher (3) lädt oder entlädt, und
die drei Umkehr-Stromrichter (2.1, 2.2, 2.3) an den Energiespeicher (3) angeschlossen und über einen Regler (5) spannungsabhängig gesteuert werden,
**dadurch gekennzeichnet, dass** die im Drehstromnetz (1) vorliegende Ist-Spannung (Uᵢₛₜ) in Echtzeit, deren Zeitelemente durch Bruchteile einer einzigen Millisekunde definiert sind, erfasst und einem Rechner (4) zugeführt wird, der daraus eine ideale Sinus-Spannung als Sollspannung (Uₛₒₗₗ) durch ein in den Rechner (4) eingegebenes Bandpass-Modell errechnet, welches aus zwei hintereinander geschalteten Bandpässen (6.1, 6.2) besteht, die auf eine Frequenz von 50 Hz ± 0,1 Hz abgestimmt sind und phasendrehungsfrei arbeiten sowie eine Übertragungsfunktion (eins) aufweisen, und dass die spannungsabhängige Regelung der drei Umkehr-Stromrichter (2.1, 2.2, 2.3) entsprechend der Differenz zwischen der Ist-Spannung (Uᵢₛₜ) und der idealen Sinus-Spannung (Uₛₒₗₗ) erfolgt.

2. Verfahren zur Verbesserung der Spannungsqualität in einem Drehstromnetz (1) durch Leistungseinspeisung aus einem Energiespeicher (3) mit Hilfe eines aktiven Kompensators, wobei
an jede der drei Phasen (U, V, W) des Drehstromnetzes (1) ein Umkehr-Stromrichter (2.1, 2.2, 2.3) angeschlossen wird, der je nach dem augenblicklichen Leistungseinspeisungsbedarf des Drehstromnetzes (1) den Energiespeicher (3) lädt oder entlädt, und
die drei Umkehr-Stromrichter (2.1, 2.2, 2.3) an den Energiespeicher (3) angeschlossen und über einen gemeinsamen Regler (5) spannungsabhängig gesteuert werden,
**dadurch gekennzeichnet, dass** die im Drehstromnetz (1) vorliegende Ist-Spannung (Uᵢₛₜ) in Echtzeit, deren Zeitelemente durch Bruchteile einer einzigen Millisekunde definiert sind, erfasst und einem Rechner (4) zugeführt wird, der daraus eine ideale Sinus-Spannung als Sollspannung (Uₛₒₗₗ) nach Maßgabe einer Phase-Locked-Loop-Schaltung errechnet, und dass die spannungsabhängige Regelung der drei Umkehr-Stromrichter (2.1, 2.2, 2.3) entsprechend der Differenz zwischen der Ist-Spannung (Uᵢₛₜ) und der idealen Sinus-Spannung (Uₛₒₗₗ) erfolgt.

3. Verfahren nach Anspruch 1 oder 2, **dadurch gekennzeichnet, dass** als Energiespeicher (3) eine Akkumulatorenbatterie verwendet wird.

4. Verfahren nach Anspruch 1 oder 2, **dadurch gekennzeichnet, dass** als Energiespeicher ein supraleitender magnetischer Energiespeicher verwendet wird.

5. Verfahren nach einem der Ansprüche 1 bis 4, **dadurch gekennzeichnet, dass** mit pulsweitenmodulierten Umkehr-Stromrichtern (2.1, 2.2, 2.3) gearbeitet wird.

6. Verfahren nach einem der Ansprüche 1 bis 5, **dadurch gekennzeichnet, dass** die Umkehr-Stromrichter (2.1, 2.2, 2.3) eine Schaltfrequenz oberhalb der Netzfrequenz aufweisen.

7. Verfahren nach einem der Ansprüche 1 bis 6, **dadurch gekennzeichnet, dass** die Regelung mit Hilfe eines Zweipunktreglers erfolgt, dessen Regelpunkte einerseits durch eine obere Toleranzschwelle (Uₛₒₗₗ+Δ) und andererseits durch eine untere Toleranzschwelle (Uₛₒₗₗ-Δ) in Bezug auf die momentane ideale Sinus-Spannung (Uₛₒₗₗ) vorgegeben werden, und dass so lange Leistung aus dem Energiespeicher (3) in das Drehstromnetz (1) eingespeist wird, bis die obere Toleranzschwelle (Uₛₒₗₗ+Δ) erreicht wird, und anschließend so lange Leistung aus dem Drehstromnetz (1) aufgenommen und dem Energiespeicher (3) zugeführt wird, bis die untere Toleranzschwelle (Uₛₒₗₗ-Δ) erreicht ist, wobei die Ausregelspanne Bruchteile einer Millisekunde beträgt.

## Claims

1. A method of improving the voltage quality in a three-phase mains system (1) by supplying power from an energy storage device (3) with the aid of an active compensator, wherein
a two-way inverter (2.1, 2.2, 2.3) is connected to each of the three phases (U, V, W) of the three-phase mains system (1) and charges or discharges the energy storage device (3) depending on the instantaneous power supply requirement of the three-phase mains system (1), and
the three two-way inverters (2.1, 2.2, 2.3) are connected to the energy storage device (3) and are subjected to voltage-dependent control via a controller (5),
**characterised in that** the instantaneous voltage (Uᵢₛₜ) which exists in the three-phase mains system (1) is determined in real time, the time elements of which are defined by fractions of a single millisecond, and is fed to a computer (4) which calculates an ideal sinusoidal voltage therefrom as a set voltage (Uₛₒₗₗ) by means of a band-pass model which is stored in the computer (4) and which consists of two band-pass filters (6.1, 6.2) which are connected in series, which are tuned to a frequency of 50 Hz ± 0.1 Hz, which operate free from phase angle rotation and which comprise a transfer function (one), and that voltage-dependent control of the three two-way inverters (2.1, 2.2, 2.3) is effected depending on the difference between the instantaneous voltage (Uᵢₛₜ) and the ideal sinusoidal voltage (Uₛₒₗₗ).

2. A method of improving the voltage quality in a three-phase mains system (1) by supplying power from an energy storage device (3) with the aid of an active compensator, wherein
a two-way inverter (2.1, 2.2, 2.3) is connected to each of the three phases (U, V, W) of the three-phase mains system (1) and charges or discharges the energy storage device (3) depending on the instantaneous power supply requirement of the three-phase mains system (1), and
the three two-way inverters (2.1, 2.2, 2.3) are connected to the energy storage device (3) and are subjected to voltage-dependent control via a controller (5),
**characterised in that** the instantaneous voltage (Uᵢₛₜ) which exists in the three-phase mains system (1) is determined in real time, the time elements of which are defined by fractions of a single millisecond, and is fed to a computer (4) which calculates an ideal sinusoidal voltage therefrom as a set voltage (Uₛₒₗₗ) in accordance with a phase-locked loop circuit, and that voltage-dependent control of the three two-way inverters (2.1, 2.2, 2.3) is effected depending on the difference between the instantaneous voltage (Uᵢₛₜ) and the ideal sinusoidal voltage (Uₛₒₗₗ).

3. A method according to claims 1 or 2, **characterised in that** a storage battery is used as the energy storage device (3).

4. A method according to claims 1 or 2, **characterised in that** a superconducting magnetic energy storage device is used as the energy storage device.

5. A method according to any one of claims 1 to 4, **characterised in that** pulse width-modulated two-way inverters (2.1, 2.2, 2.3) are employed.

6. A method according to any one of claims 1 to 5, **characterised in that** the two-way inverters (2.1, 2.2, 2.3) have a switching frequency higher than the mains frequency.

7. A method according to any one of claims 1 to 6, **characterised in that** control is effected with the aid of a two-point controller, the control points of which are predetermined firstly by an upper tolerance threshold (Uₛₒₗₗ + Δ) and secondly by a lower tolerance threshold (Uₛₒₗₗ - Δ) with respect to the instantaneous ideal sinusoidal voltage (Uₛₒₗₗ), and that power is fed into the three-phase mains system (1) from the energy storage device (3) until the upper tolerance threshold (Uₛₒₗₗ + Δ) is reached, and power is subsequently withdrawn from the three-phase mains system (1) and is fed to the energy storage device (3) until the lower tolerance threshold (Uₛₒₗₗ - Δ) is reached, wherein the deviation control interval amounts to fractions of a millisecond.

## Revendications

1. Procédé pour améliorer la qualité de la tension dans un réseau triphasé (1) par alimentation en puissance à partir d'un accumulateur d'énergie (3), à l'aide d'un compensateur actif, dans lequel
à chacune des trois phases (U, V, W) du réseau triphasé (1) est raccordé un redresseur inverseur (2.1, 2.2, 2.3) qui charge ou décharge l'accumulateur d'énergie (3), suivant les besoins momentanés en alimentation en puissance du réseau triphasé (1), et
les trois redresseurs inverseurs (2.1, 2.2, 2.3) sont raccordés à l'accumulateur d'énergie (3) et sont commandés, en fonction de la tension, par l'intermédiaire d'un régulateur (5),
**caractérisé en ce que** la tension réelle (Uᵢₛₜ) du réseau triphasé (1) est détectée en temps réel, dont les éléments de temps sont définis par des fractions d'une seule milliseconde, et est envoyée à un calculateur (4) qui calcule, à partir de celle-ci, une tension sinusoïdale idéale servant de tension de consigne (Uₛₒₗₗ), par un modèle de passe-bande introduit dans le calculateur (4) et qui est constitué de deux passe-bandes (6.1, 6.2) montés l'un derrière l'autre, qui sont accordés sur une fréquence de 50 Hz ± 0,1 Hz et travaillent sans rotation de phase, et comportent une fonction de transfert (eins), et **en ce que** la régulation en fonction de la tension des trois redresseurs inverseurs (2.1, 2.2, 2.3) s'effectue en fonction de la différence entre la tension réelle (Uᵢₛₜ) et la tension sinusoïdale idéale (Uₛₒₗₗ).

2. Procédé destiné à améliorer la qualité de la tension dans un réseau triphasé (1) par alimentation en puissance à partir d'un accumulateur d'énergie (3), à l'aide d'un compensateur actif, dans lequel
à chacune des trois phases (U, V, W) du réseau triphasé (1) est raccordé un redresseur inverseur (2.1, 2.2, 2.3) qui charge ou décharge l'accumulateur d'énergie (3), suivant les besoins momentanés en alimentation en puissance du réseau triphasé (1), et
les trois redresseurs inverseurs (2.1, 2.2, 2.3) sont raccordés à l'accumulateur d'énergie (3) et sont commandés, en fonction de la tension, par l'intermédiaire d'un régulateur (5),
**caractérisé en ce que** la tension réelle (Uᵢₛₜ) du réseau triphasé (1) est détectée en temps réel, dont les éléments de temps sont définis par des fractions d'une seule milliseconde, et est envoyée à un calculateur (4) qui calcule, à partir de celle-ci, une tension sinusoïdale idéale servant de tension de consigne (Uₛₒₗₗ), conformément à un circuit à verrouillage de phase, et **en ce que** la régulation qui est fonction de la tension des trois redresseurs inverseurs (2.1, 2.2, 2.3) s'effectue en fonction de la différence entre la tension réelle (Uᵢₛₜ) et la tension sinusoïdale idéale (Uₛₒₗₗ).

3. Procédé selon la revendication 1 ou 2, **caractérisé en ce qu'**on utilise une batterie d'accumulateurs comme accumulateur d'énergie (3).

4. Procédé selon la revendication 1 ou 2, **caractérisé en ce qu'**on utilise un accumulateur d'énergie magnétique supraconducteur en tant qu'accumulateur d'énergie.

5. Procédé selon l'une des revendications 1 à 4, **caractérisé en ce qu'**on travaille avec des redresseurs inverseurs (2.1, 2.2, 2.3) modulés en largeur d'impulsion.

6. Procédé selon l'une des revendications 1 à 5, **caractérisé en ce que** les redresseurs inverseurs (2.1, 2.2, 2.3) présentent une fréquence de commutation supérieure à la fréquence du réseau.

7. Procédé selon l'une des revendications 1 à 6, **caractérisé en ce que** la régulation s'effectue à l'aide d'un régulateur à deux points dont les points de régulation sont déterminés d'une part par un seuil de tolérance supérieur (Uₛₒₗₗ + Δ) et d'autre part par un seuil de tolérance inférieur (Uₛₒₗₗ Δ) par rapport à la tension sinusoïdale idéale instantanée (Uₛₒₗₗ), et **en ce que** l'on alimente le réseau triphasé (1) en puissance depuis l'accumulateur d'énergie (3) jusqu'à ce que le seuil de tolérance supérieur (Uₛₒₗₗ + Δ) soit atteint, et **en ce qu'**ensuite on prélève de la puissance du réseau triphasé (1) et on l'envoie à l'accumulateur d'énergie (3) jusqu'à ce que le seuil de tolérance inférieur (Uₛₒₗₗ - Δ) soit atteint, la marge de régulation représentant des fractions d'une milliseconde.
